# EUROPÄISCHE PATENTSCHRIFT

(11) **EP 3 254 780 B1**
(45) Veröffentlichungstag und Bekanntmachung des Hinweises auf die Patenterteilung: **07.07.2021**
(21) Anmeldenummer: 17000814.8
(22) Anmeldetag: 11.05.2017
(51) Int. Cl.: B21D 37/20, B23P 15/24, B21D 37/01, B21D 22/22

(54) **VERFAHREN ZUM HERSTELLEN EINES METALLBEARBEITUNGSWERKZEUGS**
METHOD FOR PRODUCING A METAL PROCESSING TOOL
PROCÉDÉ DE FABRICATION D'UN OUTIL DE FORMAGE D'UNE PIÈCES MÉTALLIQUE

(30) Priorität: 08.06.2016 DE 102016007037
(43) Veröffentlichungstag der Anmeldung: 13.12.2017
(73) Patentinhaber: AUDI AG, 85045 Ingolstadt (DE)
(72) Erfinder: Canti, Robert, DE - 80939 München (DE); Sanhieter, Stefan, DE - 86571 Langenmosen (DE); Disch, Christian, DE - 85053 Ingolstadt (DE); Noneder, Johannes, DE - 85049 Ingolstadt (DE)
(74) Vertreter: Eickmeyer, Dietmar

(56) Entgegenhaltungen:
- DE-A1- 10 155 234
- DE-A1-102013 016 255
- DE-U1-202013 012 173

## Beschreibung

Die Erfindung betrifft ein Verfahren zum Herstellen eines Metallbearbeitungswerkzeugs.

Zum Umformen eines Bauteils aus Blech wird ein Umformwerkzeug verwendet, das zwei zueinander komplementär ausgebildete Teilformen aufweist. Hierzu wird das Bauteil aus Blech zwischen den beiden Teilformen angeordnet. Danach werden die beiden Teilformen gegeneinander gedrückt, wobei das Bauteil zwischen den beiden Teilformen gepresst und umgeformt wird.

Ein Tiefziehwerkzeug für Bleche ist aus der Druckschrift DE 31 28 251 A1 bekannt. Hierbei ist zum Ausgleich einer Schwankung einer Dicke der Bleche durch eine nicht-metallische Schicht ein weichelastischer Kunststoffeinsatz in mehrfacher Stärke der Bleche lose auf dem Tiefziehwerkzeug aufzulegen, wobei der Kunststoffeinsatz durch einen Frontformguss herzustellen ist. Allerdings kann der Kunststoffeinsatz auf dem Tiefziehwerkzeug verrutschen.

In der Druckschrift DE 10 2013 016 255 A1 sind ein Werkzeug und ein Verfahren zur Herstellung eines Werkzeugs beschrieben. Mit dem Verfahren sind ein Tuschier- und Abstimmaufwand bei einem Einarbeiten von Formen und Flächen in das Werkzeug beim Tiefziehen und Schneiden zu reduzieren. Hierzu wird das Werkzeug mit hartelastischem Kunststoff mit einer Dicke von 1- 5 mm beschichtet, wobei die Beschichtung mit einem Referenzblech erzeugt wird, wobei die Beschichtung auf einer oder auf beiden Werkzeugseiten aufgebracht sein kann. Dabei wird eine Fläche, bevor darauf der hartelastische Kunststoff angeordnet wird, durch Aufrauen vorbehandelt. In der Druckschrift DE 20 2013 012 173 U1 ist eine Vorrichtung zur Durchführung eines mechanischen Verfahrens zur sequenziellen Erhöhung einer Abriebfestigkeit und zur Verringerung eines Reibwiderstands von Oberflächen von Werkzeugen und Werkstücken beschrieben. Hierbei ist vorgesehen, dass das Werkzeug im Ganzen weich bleibt, jedoch seine Oberfläche partiell reibungsarm ausgestaltet wird.

Die Druckschrift DE 101 55 234 A1 beschreibt ein Umformwerkzeug, das einen Teilbereich umfasst, der aus einem Kunststoff besteht, in den ein Material mit Gleiteigenschaften eingelagert ist. Das Umformwerkzeug wird beispielsweise für das Tiefziehen von Metallteilen eingesetzt.

Vor diesem Hintergrund wird ein Verfahren mit den Merkmalen des unabhängigen Patentanspruchs 1 vorgestellt. Ausgestaltungen des Verfahrens gehen aus den abhängigen Patentansprüchen und der Beschreibung hervor.

Das erfindungsgemäße Verfahren ist zum Bereitstellen eines Metallbearbeitungswerkzeugs, das eine erste Teilform aufweist, vorgesehen. Zum Herstellen der ersten Teilform wird ein Grundkörper aus Metall bereitgestellt, wobei eine Oberfläche des Grundkörpers in mehrere Bereiche bzw. Abschnitte aufgeteilt wird, wobei mindestens ein Bereich durch eine Oberflächenbearbeitungsmaßnahme aufgeraut wird, wobei auf dem mindestens einen aufgerauten Bereich eine Schicht aus Kunststoff, die mindestens eine Materialeigenschaft aufweist, aufgebracht wird.

Ein beispielsweise als Umformwerkzeug ausgebildetes Metallbearbeitungswerkzeug umfasst in der Regel zwei zueinander komplementär ausgebildete Teilformen, nämlich eine erste Teilform und eine zweite Teilform.

In Ausgestaltung wird der mindestens eine Bereich zunächst durch die Oberflächenbearbeitungsmaßnahme aufgeraut. Nachfolgend wird auf dem mindestens einen aufgerauten Bereich ergänzend ein Haftmittel aufgetragen, bevor darauf die Schicht aus Kunststoff aufgebracht wird. Demnach wird dem mindestens einen aufgerauten Bereich, auf dem weiterhin das Haftmittel aufgetragen ist, die Schicht aus Kunststoff, die mindestens eine Materialeigenschaft aufweist, aufgebracht.

Das Metallbearbeitungswerkzeug ist zum Bearbeiten von Bauteilen oder Werkstücken ausgebildet, die bspw. aus Blech bestehen, weshalb das Metallbearbeitungswerkzeug auch als Blechbearbeitungswerkzeug zu bezeichnen und/oder ausgebildet ist. In Ausgestaltung ist das Metallbearbeitungswerkzeug als Umformwerkzeug und/oder Trennwerkzeug ausgebildet.

In Ausgestaltung werden auf mindestens zwei unterschiedlichen Bereichen bzw. Abschnitten der Oberfläche des Grundkörpers Kunststoffe, üblicherweise zwei Arten bzw. Sorten Kunststoff, aufgebracht, die sich durch mindestens eine Materialeigenschaft voneinander unterscheiden.

Als die mindestens eine Materialeigenschaft der Schicht aus Kunststoff wird bzw. werden eine Art und somit eine chemische Zusammensetzung des Kunststoffs, eine Federhärte und/oder eine Elastizität bzw. ein E-Modul des Kunststoffs, ein Reibwert des Kunststoffs sowie eine Dicke der Schicht berücksichtigt und somit gewählt und/oder eingestellt. Die auf unterschiedlichen Bereichen der Oberfläche aus Metall befestigten Schichten aus Kunststoff unterscheiden sich mindestens durch die Art bzw. Zusammensetzung des Kunststoffs und somit in der Regel durch dessen Reibwert und/oder dessen Federhärte sowie in Ausgestaltung durch die Dicke der jeweiligen Schicht.

Üblicherweise wird der Kunststoff über das Haftmittel auf den mindestens einen Bereich bzw. Abschnitt des Grundkörpers geklebt.

Bei einer Ausgestaltung des Verfahrens wird an, bspw. auf dem bearbeiteten Bereich der Oberfläche des Grundkörpers mindestens eine Gussform angeordnet, wobei die mindestens eine Gussform und der mindestens eine bearbeitete Bereich der Oberfläche mindestens einen Hohlraum umschließen, der eine Negativform für den auf dem bearbeiteten Abschnitt aufzutragenden Kunststoff und somit die hierbei bereitzustellende Schicht bildet. In den mindestens einen Hohlraum wird flüssiger Kunststoff gefüllt und ausgehärtet, wobei der Kunststoff an/auf dem mindestens einen bearbeiteten Bereich mit der Oberfläche des Grundkörpers verbunden und unter Bereitstellung der Schicht darauf angeordnet und/oder damit bzw. daran befestigt wird.

In der Regel wird der mindestens eine Bereich beim Bearbeiten zunächst spanend bearbeitet und somit aufgeraut. In Ausgestaltung wird der mindestens eine Bereich gefräst und somit spanend bearbeitet.

Als weitere Komponente des Metallbearbeitungswerkzeugs wird neben der ersten Teilform eine zweite Teilform bereitgestellt, die als Gegenstück zu der ersten Teilform ausgebildet ist. So weist diese zweite Teilform an einer Oberfläche mindestens eine Ausnehmung auf, die zu der mindestens einen Schicht auf der Oberfläche der ersten Teilform korrespondiert. In der Regel sind die Oberflächen der beiden Teilformen zueinander komplementär ausgebildet.

Die Oberfläche der zweiten Teilform ist in Ausgestaltung nur und/oder komplett aus Metall gebildet.

Das Metallbearbeitungswerkzeug, bspw. ein Umformwerkzeug und/oder Trennwerkzeug, ist durch eine Ausführungsform des vorgestellten Verfahrens herzustellen und zum Bearbeiten, bspw. Umformen, eines Werkstücks bzw. Bauteils ausgebildet.

Das Metallbearbeitungswerkzeug umfasst eine erste Teilform mit einem Grundkörper aus Metall, dessen Oberfläche in mehrere Bereiche aufgeteilt ist, wobei mindestens ein Bereich der Oberfläche aufgeraut und bearbeitet ist. Auf dem mindestens einen aufgerauten Bereich ist eine Schicht aus Kunststoff, die mindestens eine Materialeigenschaft aufweist, aufgebracht und somit befestigt. Eine zweite Teilform des Metallbearbeitungswerkzeugs ist als Gegenstück zu der ersten Teilform ausgebildet.

In einer alternativen Ausgestaltung ist auf dem mindestens einen aufgerauten Bereich zunächst ein Haftmittel aufgetragen. Danach ist auf das Haftmittel die Schicht aus Kunststoff aufzutragen.

Das Metallbearbeitungswerkzeug ist in Ausgestaltung zum Umformen eines Werkstücks bzw. Bauteils aus Metall ausgebildet, wobei das umzuformende Werkstück bzw. Bauteil in der Regel als Blech ausgebildet wird oder zu bezeichnen ist.

Bei einem Betrieb des Metallbearbeitungswerkzeugs ist das umzuformende Werkstück zwischen der ersten Teilform, deren Oberfläche aus Metall gebildet ist, und auf der mindestens eine Schicht Kunststoff mit mindestens einer Materialeigenschaft aufgetragen ist, und einer zweiten Teilform, deren Oberfläche komplett aus einem harten Material, bspw. Metall oder einem Werkstoff, der Minerale enthält, bspw. Beton, gebildet ist, anzuordnen. Die beiden Teilformen sind gegeneinander zu drücken und/oder zu pressen, wodurch das Werkstück, d. h. durch die beiden bzw. zwischen den beiden Teilformen, umzuformen und demnach zu bearbeiten ist.

Im Vergleich zu einem üblichem Metallbearbeitungswerkzeug, dessen beide Teilformen komplett aus Metall gebildet sind, wird durch Vorsehen mindestens einer Schicht aus Kunststoff mit mindestens einer Materialeigenschaft der Reibwert bzw. Reibkoeffizient in jenem Bereich der Oberfläche der ersten Teilform, auf der die mindestens eine Schicht aus Kunststoff aufgebracht ist, und dem Bauteil aus Metall erhöht, wohingegen ein Reibwert zwischen zwei Teilen aus Metall in der Regel geringer ist. Somit kann bei Einsatz des Metallbearbeitungswerkzeugs eine Normalkraft bzw. Niederhaltekraft, die zwischen den beiden Teilformen bei einem Umformen des Bauteils aufzubringen ist, bei gleichbleibender Haltekraft bzw. Rückhaltekraft reduziert werden. Durch Reduktion der Niederhaltekraft wird das Bauteil durch die mindestens eine Schicht aus Kunststoff nicht verformt bzw. plastifiziert. Ferner werden mit dem Metallbearbeitungswerkzeug ansonsten auftretende Zugkräfte, die bei einem Prozess wie Schneiden, Verformen und/oder Prägen auftreten, vermindert, wodurch auch ein Verzug des Bauteils oder Oberflächenfehler des umgeformten Bauteils vermieden werden.

Durch gezieltes Festlegen des mindestens einen Bereichs auf der Oberfläche der ersten Teilform sind durch Auswahl der mindestens einen Materialeigenschaft des Kunststoffs und/oder der Dicke der Schicht zwischen dem mindestens einen Bereich, auf dem die mindestens eine Schicht Kunststoff befestigt ist, und mindestens einem weiteren Bereich der Oberfläche der ersten Teilform, der lediglich aus Metall gebildet ist, für das umzuformende Bauteil veränderliche Traganteile zu erreichen. Durch den mindestens einen weiteren Bereich der Oberfläche der ersten Teilform aus Metall, bspw. aus Stahl, ist ein Ausweichen des üblicherweise blechförmigen Bauteils beim Umformen zu vermeiden. Eine Verteilung einer Kraft zwischen der Oberfläche der ersten Teilform und dem Bauteil ist unter anderem durch die Höhe bzw. Dicke der Schicht aus Kunststoff, eine Form der Fläche des mindestens einen mit Kunststoff beschichteten Bereichs und eine Art bzw. Sorte und/oder Zusammensetzung des Kunstoffs zu steuern.

Üblicherweise wird lediglich eine der beiden Teilformen mit Kunststoff beschichtet, wobei die zweite Teilform aus Metall eine Gegengeometrie zu der ersten, teilweise mit Kunststoff beschichteten Teilform bildet, wobei hierdurch eine hohe maßliche Genauigkeit des umzuformenden Bauteils zu gewährleisten ist. Beim Herstellen der ersten Teilform wird mindestens ein definierter Bereich auf der Oberfläche des Grundkörpers aus Metall grob gefräst und somit aufgeraut. Danach wird der mindestens eine aufgeraute Bereich mit dem Haftmittel, bspw. einem Haftvermittler, bestrichen, wobei das Haftmittel auf dem mindestens einem Bereich, der zuvor aufgeraut worden ist, aufgetragen wird.

Durch Einsatz der Gussform, die auf den mindestens einen bearbeiteten Bereich des Grundkörpers angeordnet wird, wobei sich zwischen der Gussform und dem mindestens einen Bereich auf der Oberfläche des Grundkörpers mindestens ein Hohlraum befindet, wird in den mindestens einen Hohlraum flüssiger Kunststoff eingeführt und somit auf der Oberfläche konturnah aufgegossen, wobei hier durch Wahl einer Geometrie der Schicht aus Kunststoff, z. B. zur Vermeidung eines Schwunds oder einer Ungenauigkeit, eine definierte Struktur bzw. ein definiertes Aufmaß der Oberfläche der ersten Teilform bereitzustellen ist.

Die Gussform bildet hierbei mit dem bereits vorab bearbeiteten Grundkörper eine negative Form für die mindestens eine Schicht aus Kunststoff. Demnach dient der Grundkörper auch als Guss- und oder Formwerkzeug für mindestens eine Schicht aus Kunststoff. Bei dem Bearbeiten des Grundkörpers aus Metall ist es möglich, durch einen Grad einer Aufrauung eine Haftung des darauf aufzutragenden Kunststoffs zu verbessern. Durch Einsatz der Gussform zum Herstellen der mindestens einen Schicht auf der Oberfläche der ersten Teilform ist diese schnell und unter geringem Aufwand mechanisch zu bearbeiten, da nunmehr Schnitt- und Vorschubparameter erhöht werden können.

Mit dem durch das Verfahren hergestellten Metallbearbeitungswerkzeug ist es u. a. möglich, ein Blech als zu bearbeitendes Bauteil mit einer weitgehend konstanten Dicke, die nur geringfügig variiert, herzustellen. Außerdem kann ein Tuschieraufwand reduziert werden. Durch Vorsehen der mindestens einen Schicht aus Kunststoff sind bspw. durch Erhöhung einer Reibung sowie Reduzierung einer nötigen Niederhaltekraft tribologische Bedingungen gezielt anzupassen. Weiterhin sind in Abhängigkeit von Funktionen und Prozessen auf der wirksamen Oberfläche der ersten Teilform veränderliche Traganteile bereitzustellen. Beim Herstellen des Metallbearbeitungswerkzeugs und/oder bei dessen Einsatz kann auf ansonsten übliche Werkzeuge oder Bauteile aus Blech verzichtet werden. Weiterhin ist die erste Teilform beschleunigt zu bearbeiten.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung Schritte einer Ausführungsform des erfindungsgemäßen Verfahrens, bei dem eine erste Ausführungsform des Metallbearbeitungswerkzeugs hergestellt wird.
Figur 2 zeigt in schematischer Darstellung ein Detail einer zweiten Ausführungsform des Metallbearbeitungswerkzeugs.

Die Figuren werden zusammenhängen und übergreifend beschrieben, gleichen Komponenten sind dieselben Bezugsziffern zugeordnet.

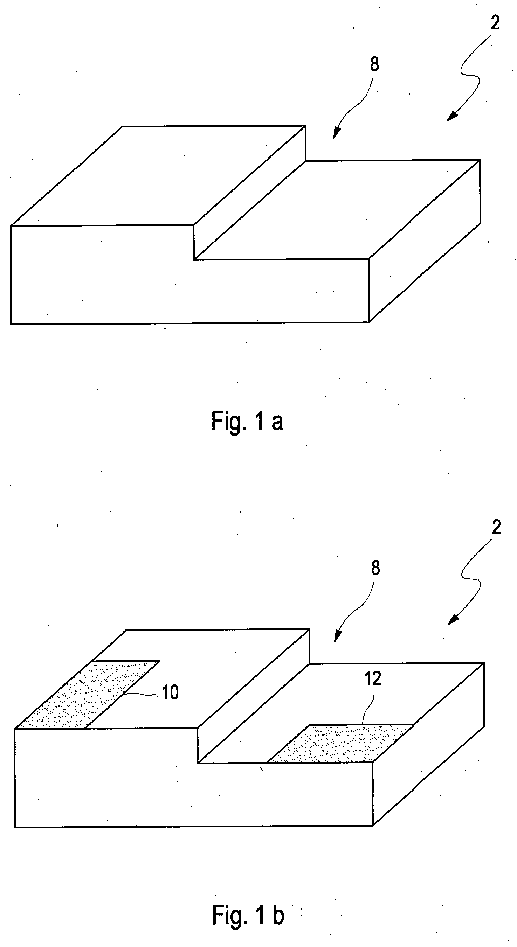

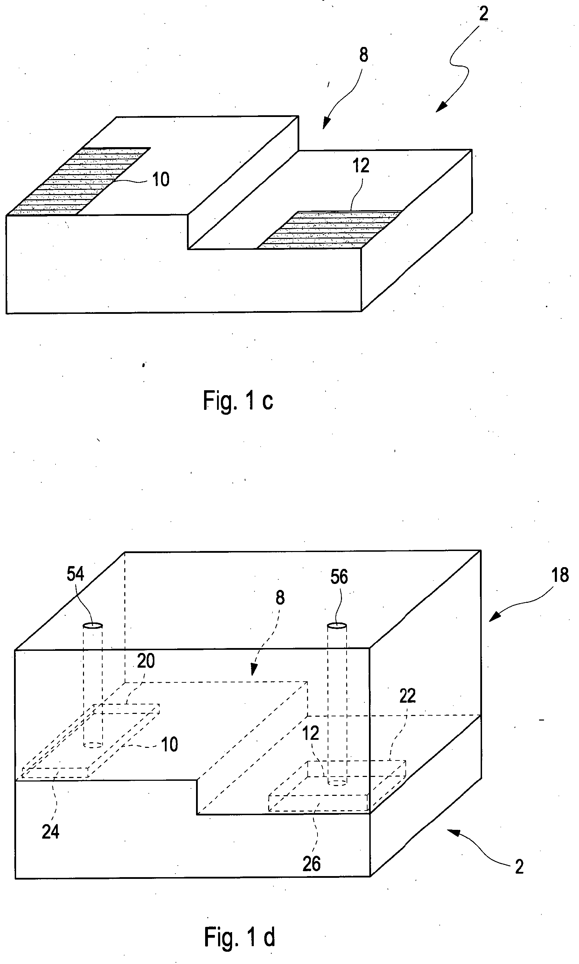

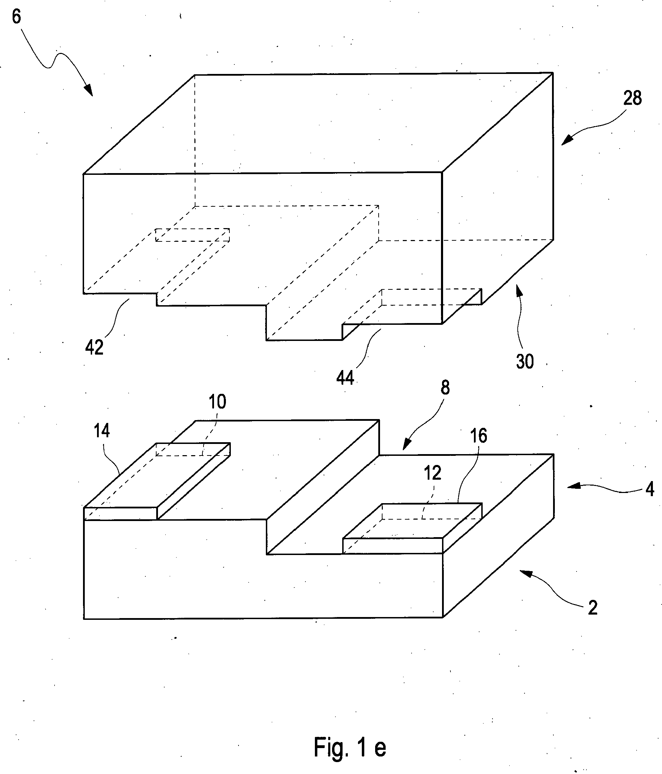

Anhand der Figuren 1a, 1b, 1c, 1d und 1e ist schematisch dargestellt, wie bei Durchführung der Ausführungsform des erfindungsgemäßen Verfahrens aus einem Grundkörper 2 aus Metall eine erste Teilform 4 als Komponente der Ausführungsform des Metallbearbeitungswerkzeugs 6 hergestellt wird.

Hierbei wird zunächst auf einer Oberfläche 8 des Grundkörpers 2 mindestens ein Bereich 10, 12, hier zwei Bereiche 10, 12 bzw. Flächen, ausgewählt, auf die im Rahmen des Verfahrens jeweils eine Schicht 14, 16 aus Kunststoff aufzubringen bzw. zu befestigen ist. Hierbei werden die beiden Bereiche 10, 12 auf der Oberfläche 8 bspw. durch Fräsen als mögliche Oberflächenbearbeitungsmaßnahme aufgeraut (Figur 1b). Danach wird auf die aufgerauten Bereiche 10, 12 ein Haftmittel aufgetragen (Figur 1c). In einem weiteren Schritt (Figur 1d) ist vorgesehen, dass auf der Oberfläche des Grundkörpers 2 eine Gussform 18 angeordnet wird.

Dabei umfasst die Gussform 18 zwei Ausnehmungen 20, 22, wobei eine erste Ausnehmung 20 dem ersten Bereich 10 auf der Oberfläche 8 des Grundkörpers 2 und eine zweite Ausnehmung 22 dem zweiten Bereich 12 auf der Oberfläche 8 des Grundkörpers 2 zugeordnet ist. Weiterhin ist vorgesehen, dass der erste Bereich 10 auf der Oberfläche 8 des Grundkörpers 2 und die erste Ausnehmung 20 einen ersten Hohlraum 24 umschließen. Der zweite Bereich 12 auf der Oberfläche 8 des Grundkörpers 2 und die Ausnehmung 22 der Gussform 18 umschließen einen zweiten Hohlraum 26. Außerdem ist jeder Ausnehmung 20, 22 und somit jedem Hohlraum 24, 26 ein innerhalb der Gussform 18 verlaufender Kanal 54, 56 zugeordnet.

Weiterhin wird in die beiden Hohlräume 24, 26 durch die Kanäle 54, 56 flüssiger Kunststoff eingefüllt und zwar in den ersten Hohlraum 24 eine erste Art bzw. Sorte Kunststoff und/oder in den zweiten Hohlraum 26 eine zweite Art bzw. Sorte Kunststoff. Somit können unterschiedliche Kunststoffe verwendet werden, die unterschiedliche chemische Zusammensetzungen und/oder Eigenschaften aufweisen. Die Kunststoffe härten innerhalb der jeweiligen Hohlräume 24, 26 aus, wobei auf dem ersten Bereich 10 die erste Schicht 14 aus der ersten Art Kunststoff gebildet werden kann, der auf dem aufgerauten und mit Haftmittel versehenen Bereich 10 des Grundkörpers 8 befestigt ist.

Dabei umfasst die erste Schicht 14 aus der ersten Art Kunststoff eine erste Dicke bzw. Höhe, einen ersten Reibwert sowie eine erste Federhärte. Weiterhin wird auf dem zweiten Bereich 12 der Oberfläche 8 die zweite Schicht 16 aus der zweiten Art Kunststoff befestigt, wobei diese zweite Schicht 16 hier eine zweite Dicke bzw. Höhe, einen zweiten Reibwert sowie eine zweite Federhärte aufweisen kann. Eine Dicke einer jeweiligen Schicht 14, 16 ist in einem ersten Schritt durch eine durch den jeweiligen Kanal 54, 56 einzufüllende Menge des jeweiligen Kunststoffs zu kontrollieren und zu steuern, aber zur Feinjustierung in einem zweiten Schritt ggf. durch Nachbearbeitung anzupassen.

Durch Befestigen der beiden Schichten 14, 16 auf den Bereichen 10, 12 der Oberfläche 8 wird aus dem Grundkörper 2 die erste Teilform 4 des Metallbearbeitungswerkzeugs 6 gebildet. Figur 1e zeigt auch eine zweite Teilform 28 als weitere Komponente des Metallbearbeitungswerkzeugs 6. Dabei weist diese zweite Teilform 28 eine Oberfläche 30 auf, die zu der Oberfläche 8 des Grundkörpers 2 mit den darauf befestigten Schichten 14, 16 aus Kunststoff komplementär ausgebildet ist. Hierbei ist die Oberfläche 30 der zweiten Teilform 28 aus Metall und weist zwei Ausnehmungen 42, 44 auf, die in den Schichten 14, 16 aus Kunststoff auf der Oberfläche 8 der ersten Teilform 4 komplementär ausgebildet sind.

Zum Umformen eines Bauteils aus Metall, üblicherweise aus Blech, ist dieses zwischen den beiden Teilformen 4, 28 des Metallbearbeitungswerkzeugs 6 anzuordnen. Danach werden die beiden Teilformen 4, 28 aufeinander zu bewegt, wobei das Bauteil zwischen den Teilformen 4, 28 gepresst wird.

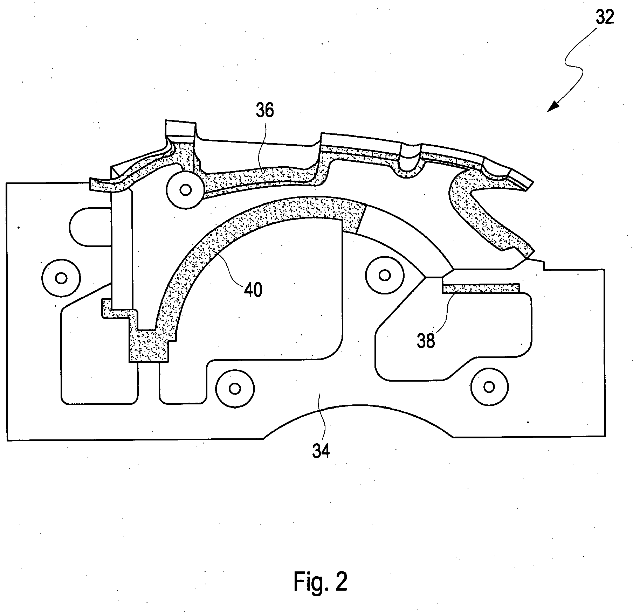

Figur 2 zeigt ein weiteres Beispiel für eine Teilform 32 als Komponente der zweiten Ausführungsform des Metallbearbeitungswerkzeugs. Auch diese Teilform 32 weist einen Grundkörper 34 aus Metall auf, auf dem hier mehrere Schichten 36, 38, 40 aus unterschiedlichen Arten Kunststoff mit unterschiedlichen Dicken befestigt sind. Diese Teilform 32 ist zum Umformen eines Kotflügels für ein Kraftfahrzeug ausgebildet.

## Patentansprüche

1. Verfahren zum Herstellen eines Metallbearbeitungswerkzeugs (6), das eine erste Teilform (4, 32) aufweist, wobei zum Herstellen der ersten Teilform (4, 32) ein Grundkörper (2, 34) aus Metall bereitgestellt wird, wobei eine Oberfläche (8) des Grundkörpers (2, 34) in mehrere Bereiche aufgeteilt wird, wobei mindestens ein Bereich (10, 12) aufgeraut wird, und wobei auf dem mindestens einen Bereich (10, 12) eine Schicht (14, 16) aus Kunststoff, die mindestens eine Materialeigenschaft aufweist, aufgebracht wird,
**dadurch gekennzeichnet,**
**dass** an dem mindestens einen Bereich (10, 12) der Oberfläche (8) des Grundkörpers (2) mindestens eine Gussform (18) angeordnet wird, wobei die mindestens eine Gussform (18) und der mindestens eine bearbeitete Bereich (10, 12) der Oberfläche (8) mindestens einen Hohlraum (24, 26) umschließen, der eine Negativform für den auf dem mindestens einen Bereich (10, 12) aufzutragenden Kunststoff bildet, wobei in den mindestens einen Hohlraum (24, 26) Kunststoff gefüllt und ausgehärtet wird, wobei der Kunststoff an dem mindestens einen Bereich (10, 12) mit der Oberfläche (8) des Grundkörpers (2, 34) verbunden und unter Bereitstellung der Schicht (14, 16) darauf aufgebracht wird.

2. Verfahren nach Anspruch 1, bei dem auf dem mindestens einen aufgerauten Bereich (10, 12) zunächst ein Haftmittel aufgetragen wird, bevor die Schicht (14, 16) aus Kunststoff aufgebracht wird.

3. Verfahren nach Anspruch 1 oder 2, bei dem auf mindestens zwei unterschiedlichen Bereichen (10, 12) der Oberfläche (8) des Grundkörpers Schichten (14, 16) aus Kunststoff aufgebracht werden, die sich durch mindestens eine Materialeigenschaft voneinander unterscheiden.

4. Verfahren nach einem der Ansprüche 1 bis 3, bei dem als die mindestens eine Materialeigenschaft der jeweiligen Schicht (14, 16) aus Kunststoff eine Art des Kunststoffs, eine Federhärte bzw. ein E-Modul des Kunststoffs, ein Reibwert des Kunststoffs und/oder eine Dicke der Schicht (14, 16) berücksichtigt werden.

5. Verfahren nach einem der voranstehenden Ansprüche, bei dem der mindestens eine Bereich (10, 12) zunächst spanend bearbeitet und somit aufgeraut wird.

6. Verfahren nach einem der voranstehenden Ansprüche, bei dem eine zweite Teilform (28) bereitgestellt wird, die als Gegenstück zu der ersten Teilform (4, 32) ausgebildet ist.

7. Verfahren nach Anspruch 6, bei dem eine Oberfläche der zweiten Teilform (28) nur aus Metall gebildet ist.

## Claims

1. Method for producing a metalworking tool (6) which has a first partial mould (4, 32), wherein a main body (2, 34) made of metal is provided for producing the first partial mould (4, 32), wherein a surface (8) of the main body (2, 34) is divided into a plurality of regions, wherein at least one region (10, 12) is roughened, and wherein a layer (14, 16) of plastic which has at least one material property is applied to the at least one region (10, 12),
**characterised in**
**that** at least one casting mould (18) is arranged on the at least one region (10, 12) of the surface (8) of the main body (2), wherein the at least one casting mould (18) and the at least one machined region (10, 12) of the surface (8) enclose at least one cavity (24, 26) which forms a negative mould for the plastic to be applied to the at least one region (10, 12), wherein plastic is filled into the at least one cavity (24, 26) and cured, wherein the plastic, on the at least one region (10, 12), is bonded to the surface (8) of the main body (2, 34) and applied thereto while providing the layer (14, 16).

2. Method according to claim 1, in which an adhesive is first applied to the at least one roughened region (10, 12) before the layer (14, 16) of plastic is applied.

3. Method according to claim 1 or 2, in which layers (14, 16) of plastic are applied to at least two different regions (10, 12) of the surface (8) of the main body, which layers differ from one another in terms of at least one material property.

4. Method according to any of claims 1 to 3, in which a type of plastic, a spring hardness or a modulus of elasticity of the plastic, a coefficient of friction of the plastic and/or a thickness of the layer (14, 16) are taken into account as the at least one material property of the respective layer (14, 16) of plastic.

5. Method according to any of the preceding claims, in which the at least one region (10, 12) is first machined and thus roughened.

6. Method according to any of the preceding claims, in which a second partial mould (28) is provided which is designed as a counterpart to the first partial mould (4, 32).

7. Method according to claim 6, in which a surface of the second partial mould (28) is formed of metal only.

## Revendications

1. Procédé de fabrication d'un outil d'usinage de métaux (6) qui présente un premier moule partiel (4, 32), dans lequel pour la fabrication du premier moule partiel (4, 32) un corps de base (2, 34) en métal est mis à disposition, dans lequel une surface (8) du corps de base (2, 34) est divisée en plusieurs zones, dans lequel au moins une zone (10, 12) est rendue rugueuse, et dans lequel sur l'au moins une zone (10, 12) une couche (14, 16) de matière plastique qui présente au moins une propriété de matériau est appliquée,
**caractérisé en ce que**
sur l'au moins une zone (10, 12) de la surface (8) du corps de base (2) au moins un moule (18) est disposé, dans lequel l'au moins un moule (18) et l'au moins une zone usinée (10, 12) de la surface (8) entourent au moins une cavité (24, 26) qui forme un moule négatif pour la matière plastique à appliquer sur l'au moins une zone (10, 12), dans lequel dans l'au moins une cavité (24, 26), de la matière plastique est déposée et durcie, dans lequel la matière plastique est reliée au niveau de l'au moins une zone (10, 12) à la surface (8) du corps de base (2, 34) et est appliquée sur celle-ci lors de la mise à disposition de la couche.

2. Procédé selon la revendication 1, dans lequel sur l'au moins une zone rendue rugueuse (10, 12) tout d'abord un adhésif est appliqué, avant d'appliquer la couche (14, 16) de matière plastique.

3. Procédé selon la revendication 1 ou 2, dans lequel sur au moins deux zones différentes (10, 12) de la surface (8) du corps de base, des couches (14, 16) de matière plastique qui se distinguent l'une de l'autre par au moins une propriété de matériau sont appliquées.

4. Procédé selon l'une quelconque des revendications 1 à 3, dans lequel en tant que l'au moins une propriété de matériau de la couche respective (14, 16) de matière plastique, on prend en compte un type de la matière plastique, une souplesse ou un module d'élasticité de la matière plastique, un coefficient de friction de la matière plastique et/ou une épaisseur de la couche (14, 16).

5. Procédé selon l'une quelconque des revendications précédentes, dans lequel l'au moins une zone (10, 12) est tout d'abord usinée par enlèvement de copeaux et ainsi est rendue rugueuse.

6. Procédé selon l'une quelconque des revendications précédentes, dans lequel un second moule partiel (28) qui est conçu comme une pièce opposée au premier moule partiel (4, 32) est mis à disposition.

7. Procédé selon la revendication 6, dans lequel une surface du second moule partiel (28) n'est formée que de métal.
